# FASCICULE DE BREVET EUROPEEN

(11) **EP 0 443 480 B1**
(45) Date de publication et mention de la délivrance du brevet: **24.04.1996**
(21) Numéro de dépôt: 91102261.4
(22) Date de dépôt: 18.02.1991
(51) Int. Cl.: C03C 25/02

(54) **Procédé et dispositif pour déposer une couche de carbone sur une fibre de verre, et fibre optique en faisant application**
Verfahren und Vorrichtung zum Aufbringen einer Kohlenstoffschicht auf eine Glasfaser und ihre Anwendung für eine optische Faser
Process and device for coating glass fibers with a carbon layer and its use for optical fiber

(30) Priorité: 22.02.1990 FR 9002197
(43) Date de publication de la demande: 28.08.1991
(73) Titulaire: ALCATEL FIBRES OPTIQUES, F-95871 Bezons Cedex (FR)
(72) Inventeur: Boniort, Jean-Yves, F-91470 Limours (FR); Brehm, Claude, F-92120 Montrouge (FR)
(74) Mandataire: Weinmiller, Jürgen

(56) Documents cités:
- EP-A- 0 308 143
- EP-A- 0 374 926
- EP-A- 0 393 755
- DE-B- 1 646 924
- FR-A- 2 493 302

## Description

La présente invention concerne un dispositif pour déposer une couche de carbone sur une fibre de verre ; elle concerne également une fibre optique en faisant application.

Habituellement une fibre optique est revêtue d'une gaine en matière plastique qui doit assurer deux fonctions :
- la protection de la fibre contre toute abrasion extérieure pour que soient conservées ses performances en résistance mécanique ; rappelons en effet que la résistance mécanique de la fibre est limitée par la présence de microfissures à sa surface, et ceci d'autant plus que la dimension de ces microfissures est élevée.
- la protection de la fibre contre les microcourbures du câble où elle est introduite, qui pourraient dégrader ses propriétés optiques.

Or, dans certaines applications, telles que le filoguidage ou diverses applications en milieu industriel, la fibre se trouve en présence d'atmosphères hostiles : vapeur d'eau, eau, liquides corrosifs, par exemple l'huile et l'hydrogène.

Sous l'action conjuguée d'un tel milieu et d'une contrainte mécanique, on constate que le gainage plastique est insuffisant, les microfissures s'agrandissent et viennent réduire la résistance mécanique des fibres. Ce phénomène est connu sous le nom de corrosion sous contrainte. En outre, dans le cas d'une diffusion d'hydrogène, on constate une altération du verre lui-même et une dégradation des propriétés optiques de la fibre.

Pour toutes les raisons précédentes, il s'est avéré indispendable de prévoir sur la fibre un revêtement hermétique de carbone devant éviter la diffusion du milieu corrosif jusqu'à la surface de la fibre.

On sait que l'on peut réaliser un tel revêtement par pyrolyse d'un hydrocarbure gazeux circulant dans un réacteur placé dans un four chauffé vers 1000°C par effet Joule. La fibre traverse alors longitudinalement le réacteur.

Ce procédé est mentionné dans l'article paru dans le "Journal of Lightware Technology vol.6 n°2 February 1988" pages 240-241 - Recent developments in hermetically coated optical fiber - par K.E. LU et al.

On constate que la mise en oeuvre du procédé précédent conduit à l'obtention d'un dépôt de carbone peu adhérent et incapable d'assurer une protection suffisante de la fibre.

La demande de brevet EP-0 308 143 divulgue un procédé pour déposer une couche de carbone sur une fibre de verre par pyrolyse d'un hydrocarbure selon lequel, préalablement à sa mise en contact avec le gaz, la fibre peut être préchauffée.

Selon le mode de réalisation suggéré par ce document, on peut faire passer la fibre dans un four de préchauffage, puis dans un réacteur de pyrolyse pour effectuer le dépôt de carbone.

Dans un tel dispositif, la fibre subit un refroidissement pendant son parcours entre le four de préchauffage et le réacteur.

La présente invention a pour but d'éviter cet inconvénient.

L'invention propose à cet effet un dispositif pour déposer une couche de carbone sur une fibre de verre par pyrolyse d'un gaz de type hydrocarbure ou hydrocarbure halogéné, ladite fibre étant préchauffée préalablement à sa mise en contact avec ledit gaz, caractérisé par le fait qu'il comprend des moyens pour faire circuler successivement ladite fibre dans un four de préchauffage à effet Joule pour préchauffer ladite fibre à une température supérieure à celle de la pyrolyse dudit gaz, puis dans une cavité à micro-ondes, ledit gaz étant introduit dans ladite cavité après avoir subi un préchauffage. Le gaz est par exemple préchauffé dans un four annexe et introduit directement dans la cavité à micro-ondes.

On a dans cette cavité une longueur de fibre à température à la fois sensiblement uniforme et suffisante pour que la pyrolyse se produise de manière satisfaisante sur toute la surface de la fibre.

Dans le dispositif selon l'invention, les longueurs du four et/ou de la cavité sont déterminées en fonction de la vitesse de défilement de la fibre.

Le gaz est choisi par exemple parmi les hydrocarbures saturés tel que le méthane, l' éthane, le propane, le butane, les hydrocarbures non saturés tels que l'acétylène, l'éthylène, le propylène, le butadiène et leurs mélanges, ainsi que parmi les hydrocarbures halogénés, tels que le dichlorométhane.

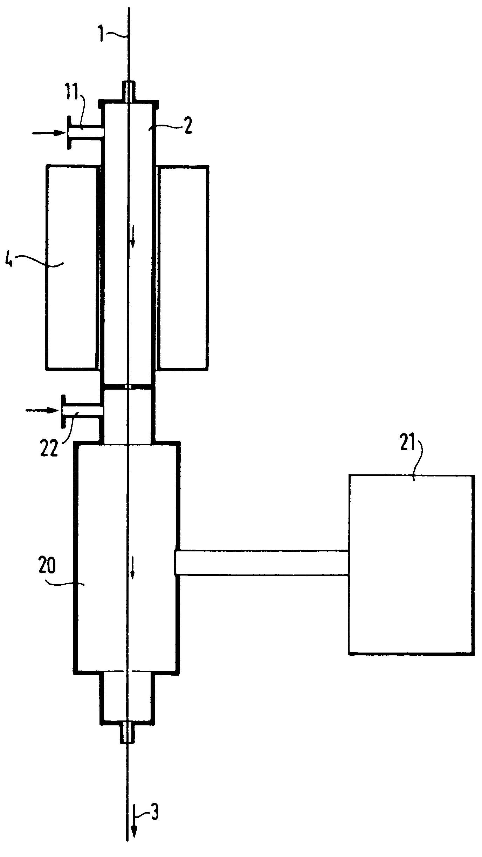

D'autres caractéristiques et avantages de la présente invention apparaîtront au cours de la description suivant d'un mode de réalisation donné à titre illustratif mais nullement limitatif. Dans le dessin annexé, la figure unique est une vue très schématique en coupe longitudinale d'un dispositif selon l'invention.

On voit dans cette figure une fibre optique 1 sortant d'un four de fibrage non illustré et circulant dans un tube de silice 2, vers un poste de gainage montré schématiquement par la flèche 3.

Selon l'invention, on prévoit sur ce trajet un four de préchauffage 4 par effet Joule autour du tube 2, suivi d'une cavité résonnante 20 associée à un générateur de micro-ondes 21. A titre d'exemple la fréquence de fonctionnement est de 2,45 GHz, sous réserve de chauffer la silice de la fibre à environ 1000°C, température à laquelle les pertes diélectriques deviennent suffisantes pour chauffer directement la silice.

Le four de préchauffage 4 est muni d'une entrée 11 de gaz neutre, par exemple d'argon.

L'hydrocarbure, éventuellement mélangé à un gaz neutre de dilution, est introduit par une tubulure 22 dans la cavité 20. Ce mélange a été préalablement préchauffé à une température inférieure à la température normale de pyrolyse car la présence de micro-ondes dans la cavité a pour effet d'abaisser la température de pyrolyse. A titre d'exemple, pour le méthane, la températue de pyrolyse T est de 1020°C, pour le butane T est de 920°C, pour le propane T est de 940°C. Cette température varie en fonction de la concentration en hydrocarbure.

La fibre 1 sortant du four de préchauffage 4 se trouve à une température suffisamment élevée pour permettre le chauffage direct de la silice par micro-ondes. La pyrolyse se trouve confinée au niveau de la surface de la fibre et on évite les dépôts gênants sur les parois de la cavité 20. De manière avantageuse, la température du four de préchauffage 4 est choisie pour que la température de la fibre 1, lorsqu'elle en sort, soit au moins supérieure à T, et de préférence supérieure de 200°C à 300°C à T. La fibre 2 entrant dans la cavité 20 a ainsi une température suffisante pour que la pyrolyse se réalise de manière uniforme sur toute sa surface avec une bonne adhérence.

Il faut prévoir une longueur du four de préchauffage 4 d'autant plus importante que la vitesse de fibrage est plus élevée.

Le dispositif selon l'invention permet de ne chauffer que la fibre 1, directement dans le réacteur de pyrolyse, sur une longueur pouvant être de l'ordre de 1 mètre, à une température uniforme et contrôlée.

Elle présente un avantage important par rapport au dispositif de l'art antérieur, dans lequel la fibre subit un refroidissement pendant son parcours.

Elle se prête particulièrement bien aux dépôts de carbone à grande vitesse rendus nécessaires par les conditions de fibrage industrielles.

Bien entendu, l'invention n'est pas limitée aux modes de réalisation qui viennent d'être décrits. On pourra, sans sortir du cadre de l'invention, remplacer tout moyen par un moyen équivalent, notamment en ce qui concerne le gaz choisi pour la pyrolyse.

## Revendications

1. Dispositif pour déposer une couche de carbone sur une fibre de verre par pyrolyse d'un gaz de type hydrocarbure ou hydrocarbure halogéné, ladite fibre (1) étant préchauffée préalablement à sa mise en contact avec ledit gaz,
caractérisé par le fait qu'il comprend des moyens pour faire circuler successivement ladite fibre dans un four de préchauffage à effet Joule (4) pour préchauffer ladite fibre à une température supérieure à celle de la pyrolyse dudit gaz, puis dans une cavité à micro-ondes (20), ledit gaz étant introduit dans ladite cavité après avoir subi un préchauffage.

2. Dispositif selon la revendication 1, caractérisé par le fait que ledit gaz est choisi parmi les hydrocarbures saturés, tels que le méthane, l'éthane, le propane, le butane et les hydrocarbures non saturés tels que l'acétylène, l'éthylène, le propylène, le butadiène et leurs mélanges, ainsi que parmi les hydrocarbures halogénés, tels que le dichlorométhane.

## Claims

1. Device for depositing a layer of carbon on a glass fibre by pyrolysis of a hydrocarbon or halogenated hydrocarbon type gas, wherein, before it is brought into contact with said gas, said fibre (1) is pre-heated,
characterised in that it comprises means for passing said fibre in succession into a Joule effect pre-heating furnace (4) to pre-heat said fibre to a temperature higher than the pyrolysis temperature of said gas and then into a microwave cavity (20), said gas being introduced into said cavity after undergoing pre-heating.

2. Device according to claim 1 characterised in that said gas is chosen from saturated hydrocarbons such as methane, ethane, propane and butane, unsaturated hydrocarbons such as acetylene, ethylene, propylene, butadiene and mixtures thereof, and halogenated hydrocarbons such as dichloromethane.

## Patentansprüche

1. Vorrichtung zum Aufbringen einer Kohlenstoffschicht auf eine Glasfaser durch Pyrolyse eines Gases vom Typ Kohlenwasserstoff oder Halogen-Kohlenwasserstoff, wobei die Faser (1) erwärmt wird, ehe sie in Kontakt mit dem Gas gelangt,
dadurch gekennzeichnet, daß Mittel vorgesehen sind, um die Faser nacheinander zur Vorerwärmung aufgrund des Joule-Effekts (4) durch einen Ofen, in dem die Faser auf eine Temperatur oberhalb der Pyrolysetemperatur des Gases gebracht wird, und dann durch einen Mikrowellenraum (20) gezogen wird, wobei das Gas in diesen Raum gelangt, nachdem es vorerwärmt wurde.

2. Vorrichtung nach Anspruch 1, dadurch gekennzeichnet, daß das Gas unter den gesättigten Kohlenwasserstoffen, wie z.B. Methan, Äthan, Propan, Butan sowie den ungesättigten Kohlenwasserstoffen wie z.B. Acetylen, Äthylen, Propylen, Butadien und ihren Mischungen, sowie unter den Halogen-Kohlenwasserstoffen wie z.B. Dichlormethan ausgewählt wird.
